**Europäisches Patentamt**

**European Patent Office**

**Office européen des brevets**

(19)

(11) Veröffentlichungsnummer: **0 254 970**

**A2**

(12) # EUROPÄISCHE PATENTANMELDUNG

(21) Anmeldenummer: **87110257.0**

(22) Anmeldetag: **16.07.87**

(51) Int. Cl.⁴: **G05D 13/62** , **H02P 5/16** , **H03M 1/00**

(30) Priorität: **26.07.86 DE 3625345**

(43) Veröffentlichungstag der Anmeldung:
**03.02.88 Patentblatt 88/05**

(84) Benannte Vertragsstaaten:
**CH DE FR GB IT LI**

(71) Anmelder: **OLYMPIA Aktiengesellschaft**
**Olympiastrasse**
**D-2940 Wilhelmshaven(DE)**

(72) Erfinder: **Kloppenburg, Ernst, Ing. grad.**
**Unter der Gaste 11**
**D-2962 Grossefehn 4(DE)**

(54) **Verfahren und Anordnung zur Erzeugung einer Tachospannung für Antriebe in einem Gleichstrommotor in Schreib- oder ähnlichen Büromaschinen.**

(57) Der wichtigste Parameter eines Tachogenerators in einem schnellen Servosystem ist die Reaktionsgeschwindigkeit der Tachospannung bei Drehzahlveränderungen, denn sie hat zusammen mit dem Motor den größten Einfluß auf die Schnelligkeit des Systems. Erfindungsgemäß werden für die Erzeugung einer Tachospannung für Antriebe mit einem Gleichstrommotor in Büromaschinen zuerst zwei phasenverschobene sinusförmige Codiersignale in einer Schaltungsanordnung verdoppelt, so daß hier Codiersignale entstehen. Danach werden die vier Codiersignale in einer Schaltungsanordnung zu einem Codiersignal mit einer dreieckförmigen Schwingung zusammengefaßt, die dann einem Differenzierglied zur Erzeugung eines Signals zugeführt wird. Dieses Signal wird in einer Schaltungsanordnung wiederum verdoppelt, so daß zwei Signale entstehen. Aus den Signalverläufen dieser beiden Signale wird durch Umschalten mit einer Logik jeweils das richtige Teilstück zur Erzeugung der Geschwindigkeitsgröße (Ist-Wert) in einer Gleichspannung ausgewählt. Für das erfindungsgemäße Verfahren ist nur ein einfacher Sensor mit grober Teilung notwendig, was sich günstig auf die Sensorkosten auswirkt. Die Schaltungsanordnung hat weiterhin nur eine sehr geringe Restwelligkeit der Tachospannung im unteren Drehzahlbereich, wodurch sich eine zusätzliche Glättung der Tachospannung erübrigt.

Fig. 5

## Verfahren und Anordnung zur Erzeugung einer Tachospannung für Antriebe in einem Gleichstrommotor in Schreib-oder ähnlichen Büromaschinen

Die Erfindung betrifft ein Verfahren und eine Anordnung zur Erzeugung einer Tachospannung für Antriebe mit einem Gleichstrommotor in Schreib-oder ähnlichen Büromaschinen nach dem Oberbegriff des Patentanspruchs 1 sowie eine Schaltungsanordnung zur Durchführung des Verfahrens.

Verfahren und Schaltungsanordnungen verschiedener Art, die einen Gleichstrommotor durch Abbremsung in die Nähe einer Zielposition bringen, sind bereits bekannt. Der wichtigste Parameter eines Tachogenerators in einem schnellen Servosystem ist die Reaktionsgeschwindigkeit der Tachospannung bei Drehzahlveränderungen, denn sie hat zusammen mit dem Motor den größten Einfluß auf die Schnelligkeit des Systems. Eine herkömmliche Signalumwandlung durch eine monostabile Kippstufe mit einem nachgeschalteten Integrator erfüllt nicht die Forderungen, wie sie für ein solches System gestellt wrden. Bei bekannten Schaltungsanordnungen dient die Geschwindigkeits-Sollwertinformation, die vom Mikroprozessor bestimmt und mit dem Digital-Analog-Umsetzer erzeugt wird, als Vergleichsgröße für das Tachosignal. Da auf der motordrehzahlabhängigen Tachospannung noch eine Störkomponente überlagert sein kann, z. B. in Form eines Temperatureinflusses auf die Codierer-Ausgangsspannung, ist ein Kompensationsschaltkreis vorgesehen. Hierdurch werden zwei Signale in einer Anordnung invertiert, so daß insgesamt vier Spannungen entstehen. Durch Dioden ist für jedes Signalpaar eine Doppelweggleichrichtung möglich. Addiert man beide Signale, so entsteht eine Gleichspannung mit einer Restwelligkeit von 30 %. Ihre Amplitude ist proportional zu der von den Spannungen der beiden Signale und enthält demzufolge auch alle temperaturbedingten Einflüsse auf den Codierer. Diese be kannte Anordnung ist empfindlich gegen Sensortoleranzschwankungen und erfordert eine Glättung der Tachospannung. Außerdem erfordert der Sensor noch ein großes Volumen und hohe Kosten.

Der Erfindung liegt die Aufgabe zugrunde, ein Verfahren und eine Anordnung zur Erzeugung einer Tachospannung für Antriebe . mit einem Gleichstrommotor in Schreib-oder Büromaschinen ähnlicher Bauart zu schaffen, die die oben genannten Nachteile nicht aufweist. Hierbei soll insbesondere die Restwelligkeit der Tachospannung im unteren Drehzahlbereich und eine Glättung der Tachospannung vermieden werden. Diese Aufgabe wird durch die im Patentanspruch 1 gekennzeichnete Erfindung gelöst.

Für das erfindungsgemäße Verfahren ist ein einfacher Sensor mit grober Teilung, z. B. 36° ausreichend, was sich günstig auf die Sensorkosten auswirkt. Die Schaltungsanordnung hat weiterhin nur eine sehr geringe Restwelligkeit der Tachospannung im unteren Drehzahlbereich, wodurch sich eine zusätzliche Glättung der Tachospannung erübrigt. Auch weist die Schaltungsanordnung gegenüber den bekannten Anordnungen nur ein Differenzierglied auf.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben. Es zeigen

Figur 1 Prinzip eines Schlittenantriebs,

Figur 2 Prinzip der Antriebesschaltung eines Gleichstrommotors,

Figur 3 Blockschaltbild der Regelschaltung,

Figur 4 Sensoreinrichtung in Draufsicht,

Figur 5 eine detaillierte Darstellung der in den Figuren 2 und 3 dargestellten Blöcke und

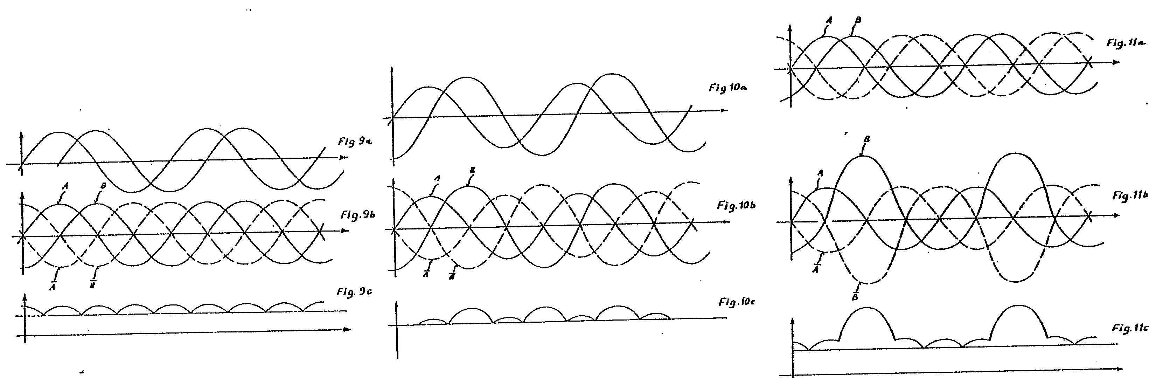

Figuren 6 bis 11 Kurvendarstellungen.

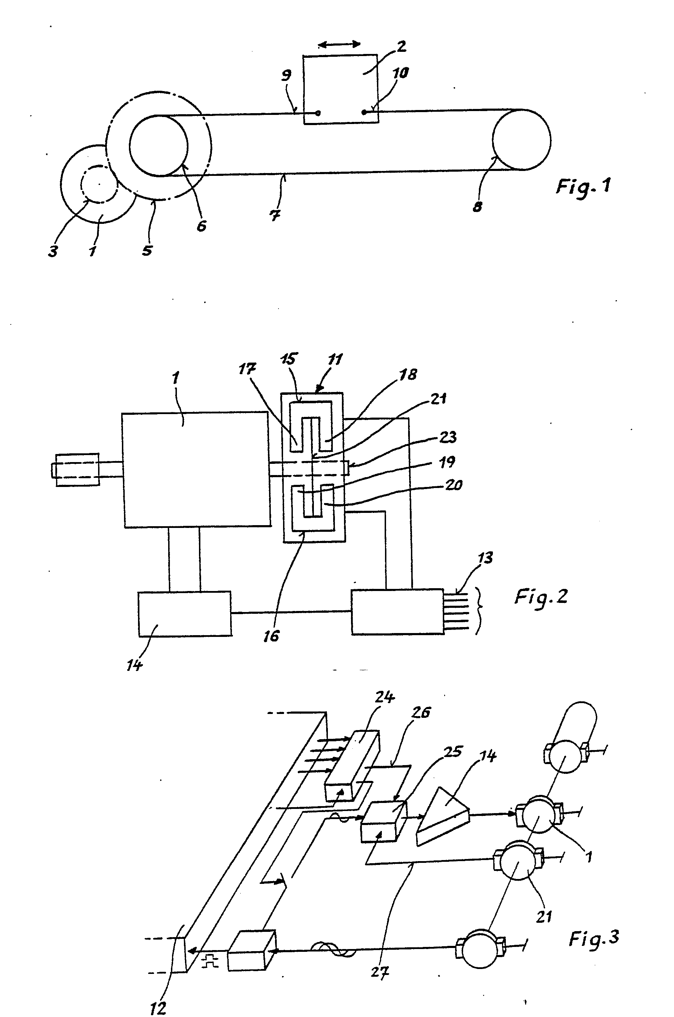

In der Figur 1 ist ein durch einen Gleichstrommotor 1 längs eines nicht dargestellten Aufzeichnungsträgers antreibbarer Schlitten 2 dargestellt, auf dem ein Druckkopf, z. B. ein drehbar gelagertes Typenrad angeordnet ist. Hierbei treibt der Gleichstrommotor 1 über ein Antriebsritzel 3 ein mit einer Seiltrommel 6 fest verbundenes Zahnrad 5 an. Die Seiltrommel 6 ist an einer Seite des Maschinengestells drehbar gelagert und wird von einem Seil 7 umschlungen, das mit einem Ende 9 mit der einen Seite des Schlittens 2 und das mit dem anderen Ende 10 über eine auf der anderen Seite des Maschinengestells angeordneten Umlenkrolle 8 mit der anderen Seite des Schlittens 2 fest verbunden ist.

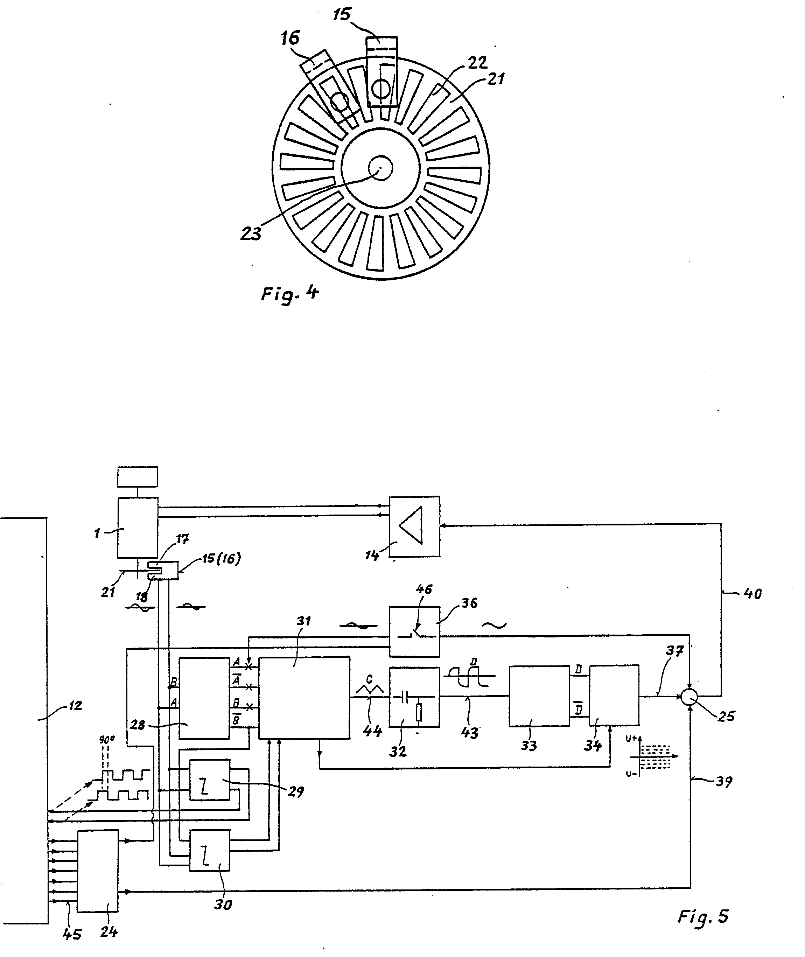

Eine Fühleinrichtung 11 ist gemäß Figur 2 zur Positions-und Geschwindigkeitsrückmeldung mit der Motorwelle 23 des Gleichstrommotors 1 mechanisch fest verbunden. Diese Fühleinrichtung 11 dient als Encoder und hat eine Taktscheibe 21 mit radial angeordneten Schlitzen 22, welche durch zwei um 90° zueinander versetzt angeordnete Sensoren 15, 16 zur Erzeugung von sinusförmigen Signalen abtastbar sin, siehe auch Figur 4. Diese Sensoren 15, 16 weisen je einen Lichtsender 17, 19 und je einen Lichtempfänger 18, 20 in bekanter Weise auf. Im Rahmen der Erfindung kann diese Abtasteinrichtung auch einen induktiven Geber und Sender aufweisen. Wesentlich ist die Erzeugung zweier Ausgangssignale, die um ein viertel der Signalperiode zueinander versetzt sind. Die Signale der beiden Sensoren 15, 16 werden sowohl in ihrer ursprünglichen Form als sinusförmiges Signal für analoge Zwecke als auch in digitalisierter Form zur Weiterverarbeitung durch ein Steuerglied 12, das aus einem Mikroprozessor besteht, verwendet. Die Phasenverschiebung der Signale erlaubt dem Mikroprozessor 12, die Drehrichtung zu erkennen und außerdem geeignete Fehlerbehandlungsroutinen durchzuführen, falls z. B. die Motorwelle 23 durch externe Krafteinwirkungen zufällig ausgelenkt wurde.

Ein Blockschaltbild der Regelschaltung ist in Figur 3 dargestellt. Der Mikroprozessor 12 steht über Eingabeleitungen 13 mit der Regelschaltung in Verbindung, von dem die Werte für die Amplitude und die Richtung der vorzunehmenden Verstellung ausgehen. Ein Digital-Analog-Wandler 24 setzt den von dem Mikroprozessor 12 vorgegebenen Geschwindigkeitscode in digitaler Form in einen analogen Spannungswert um, der dann mit dem Istwert in einer Vergleichsschaltung 25 verglichen wird. Der Sollwert wird gemäß Figur 3 über die Leitung 25 und der Istwert über die Leitung 27 von dem Tacho 21 der Vergleichsschaltung 25 zugeführt. Der in der Vergleichsschaltung 25 festgestellte Geschwindigkeitsfehler wird dann als Fehlerspannung über die Treiberschaltung der Endstufe 14 dem Gleichstrommotor 1 zugeführt. Hierbei prägt ein Spanngs-Strom-Wandler dem Gleichstrommotor 1 einen dem Geschwindigkeitsfehler proportionalen Strom ein.

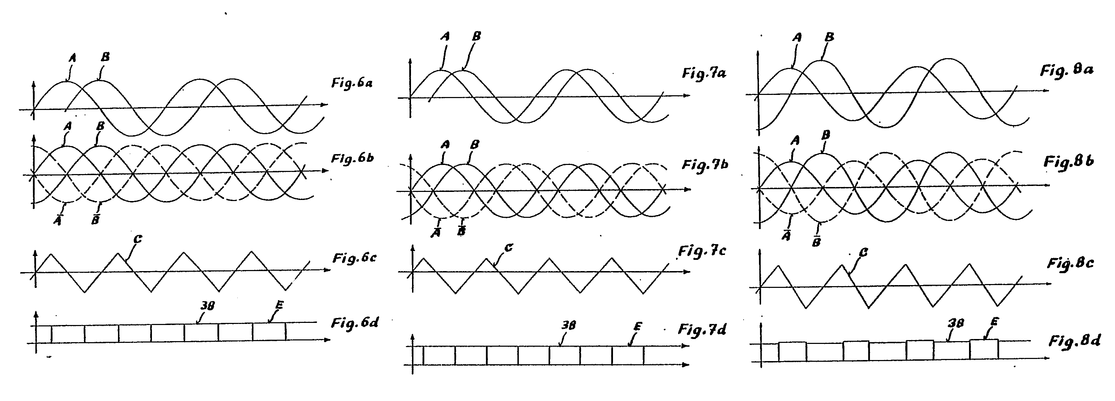

Es wird nun die Figur 5 betrachtet. Der Motor 1 und die Fühleinrichtung 11 bilden ein Teil des Systems einer Servoeinrichtung mit geschlossenem Regelkreis. Durch die Drehbewegung der Schlitzscheibe 21 werden über die Abfühleinrichtungen 15, 16 Wechselspannungen A und B erzeugt, die derart verarbeitet werden, daß ein Geschwindigkeitssignal gemäß Figur 6d auf Leitung 37 erzeugt wird. Dieses Signal 37 wird der Summenschaltung 25 zugeführt. Ein Sollwertsignal wird auf einer Leitung 39 gebildet und mit der Summenschaltung 25 gekoppelt, um ein Regelsignal auf der Leitung 40 zu bilden. Die Leitung 40 ist zu der Motortreiberstufe 14 geführt, die den Betrieb des Gleichstrommotors 1 steuert.

Die analogen Signale A und B werden einerseits je einem Impednzwandler und einem Inverter 28 zugeführt, so daß insgesamt vier Wechselspannungen A, B, $\overline{A}$ und $\overline{B}$ gemäß Figur 6b entstehen. A, B und $\overline{B}$ werden in Komparatoren 30 digitalisiert und an einen Multiplexer 31 zur Erzeugung einer dreieckförmigen Schwingung gemäß 6c weitergeleitet. Die so gewonnene Spannung auf Leitung 44 wird dann einem aus einem Kondensator 41 und einem Widerstand 42 bestehenden Differenzierglied 32 zum Differenzieren zugeführt, wodurch eine Spannung D auf der Leitung 43 erzeugt wird. Diese Spannung D wird einem Impedanzwandler und Inverter 33 zugeführt, wodurch zwei Signale D und $\overline{D}$ erzeugt werden. Aus diesen Signalen D und $\overline{D}$ wird dann schließlich über einen Multiplexer 34 das Geschwindigkeitssignal 38 als Istwert der Tachospannung auf Leitung 37 erzeugt, das der Summenschaltung 25 zugeführt wird.

Das Bezugssignal (Sollwert) auf Leitung 39 wird vom Digital-Analog-Wandler 24 erzeugt. Die Signale A und B werden in Komparatoren 30 digitalisiert und dem Mikroprozessor 12 zugeführt. Die von dem Mikroprozessor 12 ausgehenden Signale 45 werden in dem Digital/Analog-Wandler 24 in ein analoges Bezugssignal auf Leitung 39 umgewandelt. In der Summenschaltung 25 wird anhand des Bezugssignals auf der Leitung 39 und des Geschwindigkeitssignals auf der Leitung 37 geprüft, ob ein Geschwindigkeitsfehler vorliegt. Ein festgestellter Geschwindigkeitsfehler wird dann als Fehlerspannung über die Treiberschaltung (14) dem Gleistrommotor zugeführt, wodurch dann der Gleichstrommotor 1 in seiner Drehzahl korrigiert wird.

Außerdem steht die Summenschaltung 25 noch mit einem Feinpositionierglied 36 in Wirkverbindung, durch das die Halteposition des Gleichstrommotors 1 auf einen gewünschten Punkt regelbar ist. Dieses Feinpositionierungsglied 36 enthält einen Schalter 46, der je nach Beschaltung A, B, $\overline{A}$ oder $\overline{B}$ an die Summenschaltung 25 anlegt. Durch das Schließen dieses Schalters 46 wird die Feineinstellzone in bekannter Weise zur Wirkung gebracht.

Im Gegensatz zu den bekannten Lösungen, bei denen die Schwingungen gemäß den Figuren 6a und 6b getrennt differenziert und anschließend zusammengeführt werden, weist der Multiplexer 37 eine Umschaltlogik auf, durch die aus den zwei Größen D und $\overline{D}$ durch Umschalten jeweils das richtige Geschwindigkeitssignal derart ausgewählt wird, daß die Tachospannung gemäß Figur 6d entsteht.

Die Figuren 7a bis 7d entsprechen den Kurven 6a bis 6d, wodurch gezeigt wird, daß ein Fehler in der Phasenverschiebung zwischen den Signalen A und B sich nicht negativ auf die Regelspannung auswirkt. Die Kurven gemäß Figur 6d und Figur 7d sind praktisch identisch.

Die Figuren 8a bis 8d entsprechen den Kurven 6a bis 6d, wobei die beiden Schwingungen (A und B) im Maximum und im Minimum stark unterschiedlich sind. Die Figuren 8c und 8d zeigen, daß sich dieser Fehler bei der erfindungsgemäßen Schaltung auch nur sehr geringfügig auswirkt. Die erfindungsgemäße Anordnung zur Erzeugung einer Tachospannung für DC-Servoantriebe aus zwei um 90° verschobenen sinusförmigen Signalen benötigt lediglich einen einfachen und billigen Sensor mit grober Teilung. Diese Anordnung ist außerdem unempfindlich gegen grobe Toleranzen des Sensors und hat nur eine sehr geringe Restwelligkeit der Tachospannung im unteren Drehzahlbereich. Weiterhin ist bei der Feinpositionierung eine absolute Gleichspannung (Tachospannung) ohne Hysteresesprünge vorhanden. Für die einmalige Differention ist auch nur ein Differenzierglied erforderlich.

**Ansprüche**

1. Verfahren zur Erzeugung einer Tachospannung für Antriebe mit einem Gleichstrommotor aus zwei phasenverschobenen sinusförmigen Signalen, die durch eine ein von dem Gleichstrommotor antreibbares Teil mit Markierungen abtastende Abfühleinrichtung erzeugbar sind, mit Anordnungen zum Ableiten dieser Signale zu Schaltkreisen zum Differenzieren und zum Kommutieren der differenzierten Signale, die dann als Geschwindigkeitssignal den Ist-Wert bilden, und mit einer Vergleichsanordnung zum Vergleichen dieses Geschwindigkeitssignals mit einem Bezugssignal und zur Erzeugung eines Regelsignals an den Gleichstrommotor, **dadurch gekennzeichnet, daß** die Codiersignale (A, B) mit in festem Verhältnis zueinander stehenden Signalverläufen in einer Schaltungsanordnung invertiert werden, so daß vier Codiersignale (A, B, $\overline{A}$, $\overline{B}$) entstehen, daß die vier Codiersignale (A, B, $\overline{A}$, $\overline{B}$) in einer Schaltungsanordnung zu einem Signal C mit einer dreieckförmigen Schwingung zusammengefaßt werden, daß das Signal C einem Differenzierglied zur Erzeugung eines Signales D zugeführt wird, daß das Signal D in einer Schaltungsanordnung invertiert wird, so daß zwei Signale D, $\overline{D}$ entstehen und daß aus den Signalverläufen der Signale D, $\overline{D}$ durch Umschalten mit einer Logik jeweils das richtige Teilstück zur Erzeugung der Geschwindigkeitsgröße (Ist-Wert) ausgewählt wird.

2. Schaltungsanordnung zur Durchführung des Verfahrens nach Anspruch 1, **dadurch gekennzeichnet,** daß die beiden von der Abfühleinrichtung (11) gelieferten Codiersignale (A, B) einer einen Impedanzwandler und einen Inverter aufweisenden Schaltkreisanordnung (18) zur Verdoppelung zuführbar sind, daß die vier Codiersignale (A, B, $\overline{A}$, $\overline{B}$) durch einen Multiplexer (31) zur Erzeugung einer dreieckförmigen Schwingung aus Teilstücken von A, B, $\overline{A}$ und $\overline{B}$ zu einem Signal C zusammenfaßbar sind, daß das Signal C einem Differenzierglied (32) zum Differenzieren zuführbar ist,

daß das differenzierte Signal D einen einen Impedanzwandler und einen Inverter aufweisenden Schaltkreisanordnung zur Verdoppelung zuführbar ist,

daß Kurvenstücke aus den beiden Signalen (D, $\overline{D}$) durch Umschalten einer Logik in einem Multiplexer (34) derart auswählbar sind, daß die Tachospannung nach Figur 6d erzeugbar ist, daß die Tachospannung der Vergleichsschaltung (25) zuführbar ist und daß der Ausgang (40) der Vergleichsschaltung (25) der Treiberendstufe (14) zur Durchschaltung des Betriebsstromes an den Gleichstrommotor (1) in Abhängigkeit von einem positiven oder negativen Vergleichsergebnis zuführbar ist.

3. Anordnung nach Anspruch 2, **dadurch gekennzeichnet,** daß das Differenzierglied (32) aus einem Kondensator (47) und einem Widerstand (48) besteht.

4. Anordnung nach Anspruch 2 oder 3, **dadurch gekennzeichnet,** daß die beiden Codiersignale (A, B) dem Mikroprozessor (12) über Komparatoren (30) zuführbar sind und daß ein Bezugssignal von dem Mikroprozessor (12) über einen Digital-Analog-Wandler (24) an die Vergleichsschaltung (24) ableitbar ist.

5. Anordnung nach Anspruch 2, 3 oder 4, **dadurch gekennzeichnet,** daß die Codiersignale (A, B, $\overline{A}$, $\overline{B}$) mit sinusförmigen Verläufen durch Komparatoren (30) digitalisiert an den Multiplexer (31) ableitbar sind.

Fig.1

Fig.2

Fig.3

Fig. 4

Fig. 5

PS 2056

PS 2056

Fig. 6a
Fig. 7a
Fig. 8a

Fig. 6b
Fig. 7b
Fig. 8b

Fig. 6c
Fig. 7c
Fig. 8c

Fig. 6d
Fig. 7d
Fig. 8d

0 254 970

PS 2056

Fig.11a

Fig.11b

Fig.11c

Fig.10a

Fig.10b

Fig.10c

Fig.9a

Fig.9b

Fig.9c